## Europäisches Patentamt
## European Patent Office
## Office européen des brevets

(11) Numéro de publication: **0 297 941**
**A2**

## (12) DEMANDE DE BREVET EUROPEEN

(21) Numéro de dépôt: **88401456.4**

(22) Date de dépôt: **13.06.88**

(51) Int. Cl.⁴: **D 21 G 1/02**
**F 16 C 13/00**

(30) Priorité: **25.06.87 FR 8708987**

(43) Date de publication de la demande:
**04.01.89 Bulletin 89/01**

(84) Etats contractants désignés:
**AT BE CH DE ES GB IT LI NL SE**

(71) Demandeur: **PAPETERIES SIBILLE STENAY**
**F-55700 STENAY (FR)**

(72) Inventeur: **Callec, Paul**
**Le Chatelier**
**F-22690 La Vicomte sur Rance (FR)**

(74) Mandataire: **Martin, Jean-Paul et al**
**c/0 CABINET LAVOIX 2, Place d'Estienne d'Orves**
**F-75441 Paris Cedex 09 (FR)**

(54) **Rouleau pour le traitement par pression de matériaux en bande.**

(57) L'invention a pour objet un rouleau pour le traitement par pression de matériaux en bande, comprenant un arbre sur lequel sont empilées un grand nombre de couronne de feuilles qui sont comprimées entre deux flasques, ce rouleau étant caractérisé en ce que les couronnes de feuilles sont constituées de secteurs.

EP 0 297 941 A2

Bundesdruckerei Berlin

## Description

### Rouleau pour le traitement par pression de matériaux en bande

La présente invention concerne la fabrication de rouleaux de pression utilisés notamment en papeterie, dans l'industrie textile, en imprimerie, qui sont alternés avec des rouleaux en acier sur les lisses et les calandres pour modifier les caractéristiques des matériaux en bandes, notamment le lissé et la brillance pour le papier.

Ces rouleaux comprennent un arbre sur lequel sont empilées un grand nombre de couronnes de feuilles qui sont comprimées entre deux flasques. Ces rouleaux sont fabriqués traditionnellement à partir de papier à base de fibres naturelles (cellulose, laine, coton, amiante) ou de fibres artificielles en découpant, dans le papier, des couronnes dont le diamètre extérieur est légèrement supérieur au diamètre final désiré, et le diamètre intérieur égal celui du diamètre de l'arbre avec une tolérance qui dépend de la nature du matériau et de son taux d humidité.

Les matériaux utilisés, fabriqués sur une machine à papier avec un poids de 50 à 300 g/m2, présentent une anisotropie due à l'orientation prépondérante des fibres dans le sens de la fabrication (sens longueur). La couronne découpée présente donc, suivant le sens, des caractéristiques différentes, en particulier les résistances à la rupture, à la déchirure et la stabilité dimensionnelle. On retrouve le même problème d'anisotropie lorsqu'on utilise comme matériau en feuille des pellicules de matière plastique qui en raison de leur procédé de fabrication (avec étirement) présentent une anisotropie.

Pour compenser cette anisotropie qui donne une hétérogénéité au rouleau, on tourne généralement les feuilles d'un certain angle par rapport au sens long, en général 60° , en les empilant au fur et à mesure. On peut aussi faire tourner des petits paquets donnant une vitesse différente aux feuilles, soit à la main, soit mécaniquement, pour répartir au hasard les feuilles les unes par rapport aux autres.

Les paquets sont enfilés sur l'arbre et soumis à une pression axiale très importante (de 200 à 1.000 kg/cm2), successivement jusqu'à ce que l'arbre soit entièrement garni.

Sous cette pression les défauts dus à l'anisotropie sont accentués, en particulier les rouleaux à base de fibres synthétiques subissent des déformations, soit intérieures au niveau de l'arbre : décollement provoquant un balourd qui entraîne la destruction du rouleau par vibrations, soit extérieures : déformations de quelques dixièmes de mm qui provoquent une destruction par surchauffe locale.

Pour remédier à ces inconvénients on a proposé d'utiliser un revêtement de matériaux plastiques homogènes sur des presses en acier, mais ces revêtements, de type polyuréthane en général, ont une dureté élevée et ne peuvent pas donner une surface permettant un bon calandrage.

La présente invention vise à la fois à remédier aux inconvénients de l'anisotropie des matériaux en feuilles utilisés et permettre des économies importantes de matériau. Elle s'applique donc dans sa forme générale la fois au cas des matériaux en feuilles anisotropes et isotropes.

La présente invention a pour objet un rouleau pour le traitement par pression de matériaux en bande, comprenant un arbre sur lequel sont empilées un grand nombre de couronnes de feuilles qui sont comprimées entre deux flasques, ce rouleau étant caractérisé en ce que les couronnes de feuilles sont constituées de secteurs.

Dans le cas où les feuilles sont en matériau anisotrope, les secteurs sont découpés dans le matériau en feuille sensiblement suivant une même orientation, permettant d'obtenir après assemblage une quasi isotropie et donc une dureté sensiblement uniforme.

Pour que les couroones conservent leur forme sous pression malgré les sections qu'elles comportent, les secteurs sont avantageusement décalés lors de l'empilage d'une couronne à l'autre soit de la moitié de l'angle formé par le secteur, l'angle du secteur étant alors un sous multiple de 360°, soit de quelques degrés pour obtenir des lignes de raccords suivant une hélice dont le pas est fonction de l'angle de décalage et de l'épaisseur du matériau. L'angle de chaque secteur est alors avantageusement de 50 à 70°. Ceci évite la superposition des raccords qui pourraient être la cause de défauts de surface du rouleau.

Pour faciliter l'assemblage des secteurs pour former les couronnes, il est avantageux de prévoir des trous à l'intérieur des secteurs, ou bien des découpes sur la circonférence intérieure, de façon à faciliter l'assemblage sur des gabarits. Une colle résistante à la chaleur pourra être utilisée pour fixer l'assemblage ou bien un système d'agrafage.

Les découpes sur la circonférence intérieure peuvent avoir la forme de queue d'aronde ou de section en T ou en rond, et sont disposées symétriquement de façon à n'avoir qu'un seul gabarit de découpe.

Dans le cas de découpes sur la circonférence intérieure, l'arbre est muni de nervures correspondantes permettant la fixation des secteurs par introduction des découpes sur les nervures. Cela permet d'éviter le fluage du matériau vers l'extérieur lors de la mise sous pression pour la confection du rouleau.

Cette fixation non figée permet le démontage éventuel pour réparation.

Les caractéristiques finales du rouleau, sa dureté en particulier, peut être différente selon le sens de la découpe du matériau dans la feuille.

Avec des matériaux fibreux qui présentent des fibres orientées principalement dans le sens long, on obtient une dureté maximale en découpant les secteurs dans le sens travers et une dureté minimale dans le sens long.

Lorsque le rouleau est terminé, les trous d'assemblage sur gabarit peuvent être laissés en l'état ou bien être comblés par des tiges métalliques, une résine éventuellement chargée de poudre métallique.

Cette possibilité peut améliorer la rigidité de l'assemblage.

L'invention est exposée ci-après plus en détail en se référant aux dessins annexés sur lesquels :

- la Figure 1 est une vue de dessus d'une couronne utilisée dans la présente invention,
- la Figure 2 est une vue en perspective de couronnes utilisées dans la présente invention,
- la Figure 3 est une vue de dessus partielle d'une couronne utilisée dans la présente invention,
- la Figure 4 est une vue de dessus d'un mode de découpage des secteurs.

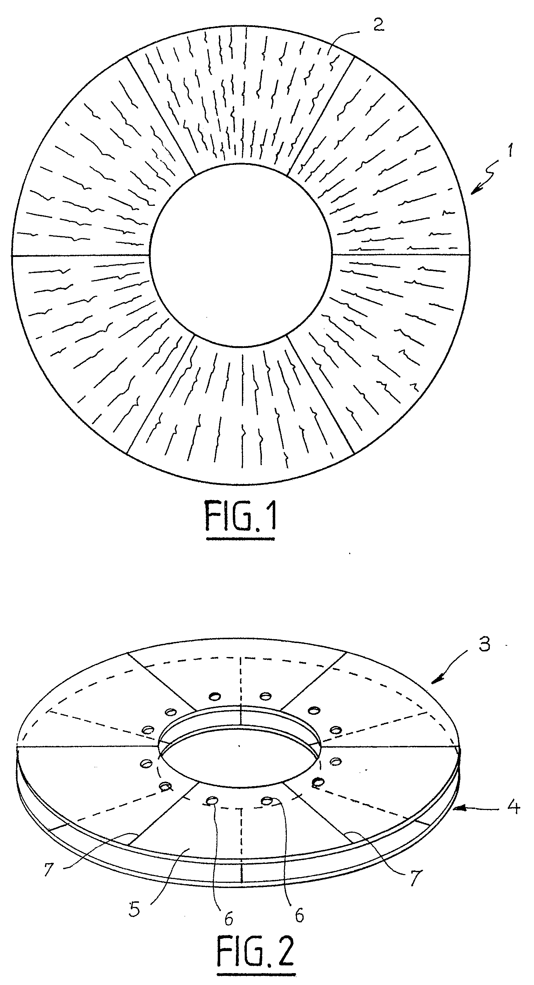

On a représenté sur la Fig. 1 une couronne 1 utilisée dans la présente invention. Cette couronne est constituée de 6 secteurs 2 circulaires ayant chacun un angle de 60°. Chaque secteur a été obtenu par découpe dans une feuille de matériau fibreux sensiblement perpendiculairement à l'orientation des firbes.

On a représenté sur la Fig. 2 deux couronnes 3 et 4 selon l'invention qui sont superposées. Chaque couronne est composée de 6 secteurs circulaires 5 ayant un angle de 60°. Ces deux couronnes 3 et 4 sont décalées l'une par rapport à l'autre d'un angle de 30°. Deux trous 6 sont ménagés dans chaque secteur. Ces trous correspondent à des angles de 15° par rapport à chaque bord 7 du secteur et permettent l'assemblage des secteurs superposés sur des gabarits.

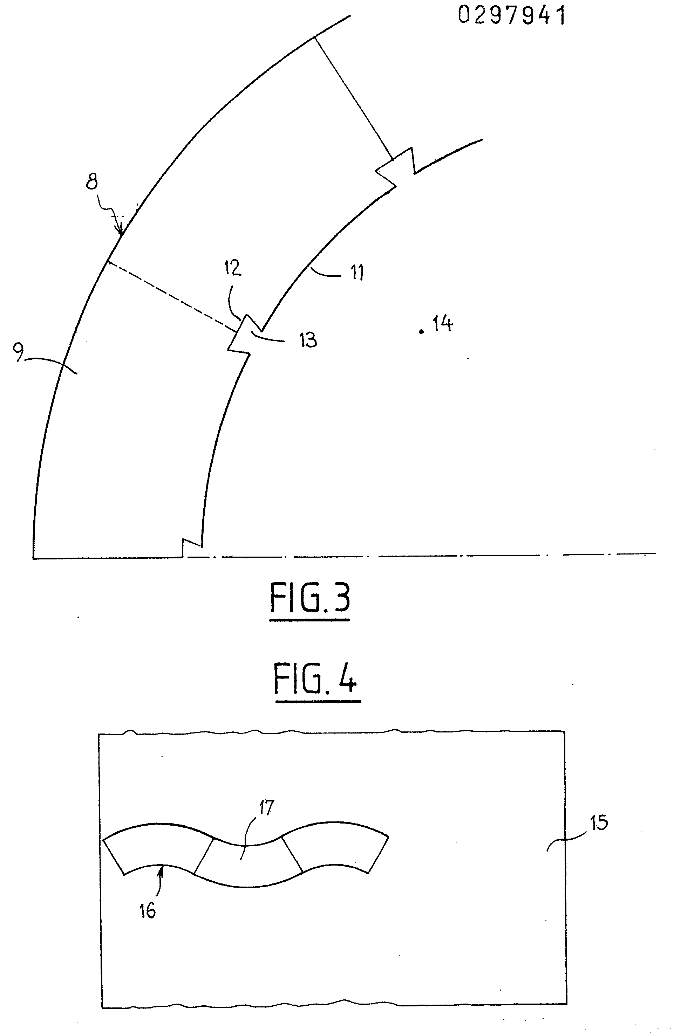

On a représenté sur la Fig. 3 une vue partielle d'une couronne 8. Cette couronne est composée de 6 secteurs 9 faisant chacun un angle de 60°. chaque secteur 9 présente sur la circonférence intérieure 11 des découpes 12 en queue d'aronde qui coopère avec des nervures 13 faisant saillie sur l'arbre 14.

On a représenté sur la Fig. 4 un mode de découpage particulièrement avantageux pour la réalisation des secteurs selon l'invention.

Le matériau en feuille 15 est découpé suivant un motif en serpentine 16. Ce motif est ensuite découpé en secteurs 17. Par cette découpe on minimise les pertes en matériau.

La différence, qui consiste à découper des secteurs dans une feuille à la place de couronnes entières, entraîne une économie importante de matière première. En effet, selon la technique antérieure les couronnes sont découpées dans des carrés, avec une marge de 5 mm de chaque côté, les déchets sont constitués par les 4 coins et le centre de la couronne. Grâce à la présente invention utilisant des couronnes constituées de secteurs, le déchet est insignifiant. Il peut être estimé à 8% dans le cas des découpes en serpentine.

**Revendications**

1. Rouleau pour le traitement par pression de matériaux en bande, comprenant un arbre sur lequel sont empilées un grand nombre de couronne de feuilles qui sont comprimées entre deux flasques, ce rouleau étant caractérisé en ce que les couronnes de feuilles sont constituées de secteurs.

2. Rouleau selon la revendication 1, dans lequel les feuilles sont en matériau anisotrope, caractérisé en ce que les secteurs sont découpés dans le matériau en feuilles sensiblement suivant une même orientation.

3. Rouleau selon la revendication 1 ou la revendication 2, caractérisé en ce que les secteurs ont un angle sous multiple de 360° et sont décalés d'une couronne à l'autre de la moitié de l'angle formé par le secteur.

4. Rouleau selon la revendication 1 ou la revendication 2, caractérisé en ce que les secteurs sont décalés d'une couronne l'autre de quelques degrés.

5. Rouleau selon l'une quelconque des revendications 1 à 4, caractérisé en ce que les secteurs présentent à l'intérieur des trous.

6. Rouleau selon l'une quelconque des revendications 1 à 4, caractérisé en ce que les secteurs présentent des découpes sur leur circonférence intérieure.

7. Rouleau selon la revendication 6, caractérisé en ceque les découpes ont la forme de queue d'aronde ou de section en T ou en rond.

8. Rouleau selon la revendication 6 ou la revendication 7, caractérisé en ce que l'arbre est muni de nervures correspondantes sur lesquelles sont introduites les découpes des secteurs.

9. Rouleau selon la revendication 5, caractérisé en ce que les trous sont comblés par des tiges métalliques, une résine éventuellement chargée de poudre métallique.

10. Rouleau selon l'une quelconque des revendications 1 à 9, caractérisé en ce que les secteurs sont obtenus par découpe en serpentine dans le matériau en feuille.

0297941

FIG.1

FIG.2

0297941

FIG.3

FIG.4